# EUROPEAN PATENT SPECIFICATION

(11) **EP 3 073 300 B1**
(45) Date of publication and mention of the grant of the patent: **02.05.2018**
(21) Application number: 15180047.1
(22) Date of filing: 06.08.2015
(51) Int. Cl.: G02B 6/02, G02B 6/024

(54) **A PHOTONIC CRYSTAL FIBRE FOR TRANSFERRING RADIALLY POLARISED LIGHT BEAM AND A METHOD OF MANUFACTURING SUCH A FIBRE**
PHOTONISCHE KRISTALLFASER ZUR ÜBERTRAGUNG EINES RADIAL POLARISIERTEN LICHTSTRAHLS UND VERFAHREN ZUR HERSTELLUNG SOLCH EINER FASER
FIBRE À CRISTAL PHOTONIQUE POUR TRANSFÉRER UN FAISCEAU LUMINEUX POLARISÉ RADIALEMENT ET PROCÉDÉ DE FABRICATION D'UNE TELLE FIBRE

(30) Priority: 25.03.2015 PL 41169615
(43) Date of publication of application: 28.09.2016
(73) Proprietor: Instytut Technologii Materialów Elektronicznych, 01-919 Warszawa (PL)
(72) Inventor: Buczynski, Ryszard, 00-575 Warszawa (PL); Stefaniuk, Tomasz, 01-684 Warszawa (PL); Pniewski, Jacek, 03-287 Warszawa (PL); Pysz, Dariusz, 01-493 Warszawa (PL); Stepniewski, Grzegorz, 59-540 Lubiechowa (PL); Stepien, Ryszard, 03-188 Warszawa (PL)
(74) Representative: Sielewiesiuk, Jakub

(56) References cited:
- J PNIEWSKI ET AL: "Supercontinuum generation in all-solid photonic crystal fibers with a low index subwavelength inclusion in the core", LASER PHYSICS, vol. 23, no. 8, 085104, 17 June 2013 (2013-06-17), page 8PP, XP055291100, RU ISSN: 1054-660X, DOI: 10.1088/1054-660X/23/8/085104
- Ryszard Buczynski ET AL: "Dispersion management in nonlinear photonic crystal fibres with nanostructured core", Journal of the European Optical Society - Rapid Publications, 11038, 31 July 2011 (2011-07-31), pages 1-6, XP055291447, DOI: 10.2971/jeos.2011.11038 Retrieved from the Internet: URL:https://www.jeos.org/index.php/jeos_rp /article/view/11038 [retrieved on 2016-07-26]
- T. G. EUSER; M. A. SCHMIDT; N. Y. JOLY; C. GABRIEL; C. MARQUARDT; L. Y. ZANG; M. F6RTSCH; P. BANZER; A. BRENN; D. ELSER: "Birefringence and dispersion of cylindrically polarized modes in nanobore photonic crystal fiber", J. OPT. SOC. AM. B, vol. 28, 22 December 2010 (2010-12-22), pages 193-198, XP002760303,
- CHUN-CAN WANG ET AL: "Broadband TE01 mode fiber coupler based on dual-core photonic crystal fiber", APPLIED OPTICS, OPTICAL SOCIETY OF AMERICA, WASHINGTON, DC; US, vol. 53, no. 32, 10 November 2014 (2014-11-10), pages 7741-7748, XP001592629, ISSN: 0003-6935, DOI: 10.1364/AO.53.007741 [retrieved on 2014-11-07]
- XIAO-XIA ZHANG ET AL: "Generation of hollow beam from photonic crystal fiber with an azimuthally polarized mode", OPTICS COMMUNICATIONS., vol. 285, no. 24, 7 November 2014 (2014-11-07), pages 5079-5084, XP055291355, NL ISSN: 0030-4018, DOI: 10.1016/j.optcom.2012.06.057
- PATRICK UEBEL ET AL: "An azimuthally polarizing photonic crystal fibre with a central gold nanowire;An azimuthally polarizing photonic crystal fibre with a central gold nanowire", NEW JOURNAL OF PHYSICS, INSTITUTE OF PHYSICS PUBLISHING, BRISTOL, GB, vol. 13, no. 6, 63016, 9 June 2011 (2011-06-09), pages 1-7, XP020205709, ISSN: 1367-2630, DOI: 10.1088/1367-2630/13/6/063016
- QIN WEI ET AL: "Numerical analysis of a photonic crystal fiber based on two polarized modes for biosensing applications", CHINESE PHYSICS B, CHINESE PHYSICS B, BRISTOL GB, vol. 22, no. 7, 74213, 11 July 2013 (2013-07-11), pages 1-6, XP020247394, ISSN: 1674-1056, DOI: 10.1088/1674-1056/22/7/074213

## Description

The present invention relates to a photonic crystal fibre for transferring radially polarised light beam used in telecommunications, subwavelength imaging, measuring interferometry and optical fibre sensors, and a method of manufacturing such a fibre.

Radial polarisation refers to such electromagnetic wave oscillations, for which the electric field vector at each point of the beam is directed towards the centre. The optical properties of radially polarised beams have been the subject of intense research in recent years. However, although several methods of forming such beams have already been proposed, there are only a few solutions allowing to maintain unchanged polarisation of the beam during propagation inside the fibre. This is due to several factors.

First of all, in conventional optical fibres effective refractive indices for individual modes of cylindrical symmetry differ only by a 1e-7 factor, which leads to the decoupling of modes and random power transfer between the modes. Second of all, linearly polarised fundamental modes with Gaussian intensity profile (LP₀₁-HE₁₁) are favoured over higher-order modes (LP₁₁-TE₀₁, TM₀₁, HE₂₁), because they are characterized by a lower attenuation and it is easier to couple light to them.

So far, only a few solutions allowing to transfer or generate radial polarisation in the optical fibres have been suggested in the literature. The earliest, mechanical methods consisted in using the resulting birefringence induced as a result of the stresses in the optical fibre. Providing a difference in propagation velocity of individual modes prevented energy transfer between them. Solutions based on this idea can be found in patent applications WO 2010005579 A1 and US 2010303402 A1. In WO 2010005579 A1 pure radial or azimuthal polarisation was achieved by step-index optical fibre, repeatedly twisted around an axis and quarter- and a half-wave plates located at the outlet of the setup. In US 2010303402 A1, the compression method using a micro-grating was applied to achieve birefringence. In addition, the optical fibre core was redesigned by embedding around it a glass ring having a different refractive index than the optical fibre core and the cladding. By adjusting the dimensions of the ring to the wavelength of the radiation used and the dimensions of the desired, cylindrically symmetric mode, discrimination of unwanted higher-order modes is possible. Both publications are based on mechanical solutions. This necessitates time-consuming adjusting of the setup before the desired output polarisation is achieved.

Partially similar concept is used in the Chinese patent application CN 101938080 A, which proposed an air-glass structure surrounding the rare-earth-doped core. However, this publication lacked an analysis of performance of the fibres, as well as the confirmation of the effectiveness of the solution. The solution in CN 101938080 A is also difficult to implement in terms of technology because it implies the use of rectangular air holes.

A different method of generating radial polarisation is shown in the patent application US 2013177273 A1, which proposed a multi-core optical fibre capable of generating and maintaining radial polarisation. The principle of the proposed optical fibre is based on the use of birefringent materials, in each of the elliptical cores, having differently oriented optical axes. Although due to generating such a spatially-dependent birefringence it is possible to generate radial polarisation from linear polarisation, it is only possible within the elliptical cores, and not the entire cross-section of the beam. Furthermore, the confirmation of efficiency of such solution was not presented.

There are also two scientific papers describing the optical fibres capable of maintaining radial polarisation. First of them, [1] (Birefringence and dispersion of cylindrically polarized modes in nanobore photonic crystal fiber T. G. Euser, M. A. Schmidt, N. Y. Joly, C. Gabriel, C. Marquardt, L. Y. Zang, M. Förtsch, P. Banzer, A. Brenn, D. Elser, M. Scharrer, G. Leuchs, and P. St.J. Russell, J. Opt. Soc. Am. B 28, 193-198 (2011)), relates to the impact of embedding air nano-inclusion in the core of the photonic crystal fibre on the effective refractive indices for individual modes of cylindrical symmetry. In the second paper, [2], An azimuthally polarizing photonic crystal fibre with a central gold nanowire P. Uebel, M. A. Schmidt, M. Scharrer and P. St. J. Russell, New J. Phys. 13 063016 (2011), the ability of maintaining the azimuthal polarisation in the optical fibre with the core comprising the nano-inclusion made of a metal rod is considered.

The solutions presented in patent applications CN 101938080 A and US 2013177273 A1 as well as in paper [1] do not discriminate linearly polarised fundamental mode of Gaussian intensity profile in any way. On the other hand, the solution described in paper [2] allows only to maintain azimuthal polarisation rather than the radial one. Moreover, in this case, very high attenuation disqualifies this type of optical fibre in real applications. A photonic crystal fibre according to the preamble of claim 1 is disclosed in J PNIEWSKI ET AL: "Supercontinuum generation in all-solid photonic crystal fibers with a low index subwavelength inclusion in the core", LASER PHYSICS, vol. 23, no. 8, 17 June 2013, page 085104, DOI: 10.1088/1054-660X/23/8/085104, as well as in Ryszard Buczynski ET AL: "Dispersion management in nonlinear photonic crystal fibres with nanostructured core", Journal of the European Optical Society - Rapid Publications, 31 July 2011, page 11038, DOI: 10.2971/ jeos.2011.11038], URL: https://www.jeos.org/index.php/jeos_rp/article/view/11038. Thus, there is a need to design such an optical fibre that would be free of the above drawbacks. Another object is to provide a method of manufacturing such an optical fibre.

The inventors of the present invention have surprisingly found out that, by embedding the inclusion with a suitably selected geometry and of appropriately selected materials in the optical fibre core, an optical fibre effectively transfering the radial polarisation is achieved.

The object of the present invention is a photonic crystal fibre for transferring radially polarised light beam, having a core, preferably centrally located and a photonic cladding surrounding the core, wherein the photonic cladding comprises nanoholes filled with air or nanorods, said fibre having the refractive index n_{CORE} of the core higher than the effective refractive index n_{eff} of the photonic cladding and higher than the refractive index of the nanoholes or rods, and within the core, preferably at its geometrical centre, a nano-inclusion is arranged, characterized in that the nano-inclusion in the form of a metal rod arranged in a nanotube made of a dielectric or surrounded by set of rods made of dielectric, wherein said dielectric has the refractive index n_{INC} different from the refractive index n_{CORE} of the core, and the said dielectric is glass, and preferably the material of the rod is selected from a group of metals comprising silver, gold, aluminium, copper, zinc, chromium, tin or forming alloy of these metals, and wherein the nano-inclusion introduces birefringence between the azimuthal and radial polarization modes and discriminates all the optical fibre modes except the radial polarisation mode. Preferably, the dielectric is a D1 dielectric having a refractive index n_{D1} higher than the refractive index n_{CORE} of the core.

Alternatively preferably, the dielectric is a D2 dielectric having a refractive index n_{D2} lower than the refractive index n_{CORE} of the core.

According to a preferred embodiment of the invention the dielectric D1 or dielectric D2 are selected from the group of exemplary glass: SF6, SF57, PBG-08, PBG-89, F2, FK5, NC21A, NC32, NC34, NC41, LLF1, PBS-57A, KB-03. The nano-inclusion dielectric is also made of glass, whose thermal properties are matched to the thermal properties of the optical fibre core, so that they allow the technical draw of the optical fibre using the stack-and-draw method. This condition is not met by just any set of glass. In an optical fibre according to the present invention, the nano-inclusion is in the form of a metal rod arranged in a nanotube made of a dielectric or in the form of a set of rods made of dielectric surrounding the metal rod, and preferably the material of the rod is selected from a group of metals comprising silver, gold, aluminium, copper, zinc, chromium, tin or forming alloy of these metals. Also other metal that is low-loss in the infrared range may be used as the metal rod material.

The nanotube may be made of the dielectric D1 or D2. Depending on the selected dielectric the following condition is met:
n_{D1} (the refractive index of the dielectric D1)> n_{CORE} (the refractive index of the core)> n_{eff} (the effective refractive index of the photonic cladding)
or: n_{D2} (the refractive index of the dielectric D2) < n_{CORE} (the refractive index of the core)
In an optical fibre according to the present invention, the nano-inclusion introduces birefringence between the optical fibre modes and discriminates all the optical fibre modes except the radial polarisation mode. The diameter d_{INC 1} of the nano-inclusion metal rod may be in the range from 5 nm to 500 nm, for example, it is 50 nm.

In the preferred embodiment, the core is made of glass, for example NC21A glass. The diameter of the core may be in the range of from 300 nm to 5000 nm, for example, it is 2400 nm.

Preferably, the photonic cladding is made of glass, for example NC21A glass. The diameter of the cladding may be in the range of from 1 nm to 30 000 nm, for example, it is 16 200 nm.

Preferably, the nanorods of the photonic cladding are made of glass with the refractive index lower than the refractive index n_{CORE} of the core (1), preferably selected from the group of exemplary glass: SF6, SF57, PBG-08, PBG-89, F2, FK5, NC21A, NC32, NC34, NC41, LLF1, PBS-57A, KB-03.

The diameter of the nano-inclusion d_{INC 2} may be from 5 nm to 1500 nm.

Preferably, the photonic cladding includes the inner ring of nanorods or nanoholes directly adjacent to the core, having a diameter d₂ and the outer ring of nanorods or nanoholes having a diameter d₁, wherein preferably the diameter d₂ is smaller than the diameter d₁.

Preferably, the diameter d₂ is 600 nm and the diameter d₁ is 1200 nm.

Both the diameter d₂ and the diameter d₁ do not exceed 3000 nm.

Preferably, the nanorods or nanoholes of the photonic cladding are arranged in the photonic cladding in a hexagonal structure.

Preferably, the fibre according to the present invention transfers radial polarisation across the entire cross-section of the beam.

Preferably, the core is located at the geometrical centre of the optical fibre.

The object of the present invention is also a method of manufacturing the fibre using the *stack-and-draw* technique comprising the steps of:
- placing the materials for the optical fibre in the structural preform, so that the centrally located material for the core is surrounded by the material for the photonic cladding, whereas in the material for the core and preferably in its geometrical centre there is a material for the nano-inclusion, wherein the material for the nano-inclusion contains a metal alloy surrounded by the dielectric whose refractive index n_{INC} differs from the refractive index a n_{CORE} of the core, and the said dielectric is made of glass wherein it is preferred to use a metal selected from a group of metals comprising silver, gold, aluminium, copper, zinc, chromium, tin, or an alloy of these metals,
- thinning the preform into the form of an optical fibre at the tower for drawing optical fibre cables.

Preferably, a dielectric being the D1 dielectric is used, having the refractive index n_{D1} higher than the refractive index n_{CORE} of the core.

Alternatively, preferably a dielectric being the D2 dielectric is used, having the refractive index n_{D1} lower than the refractive index n_{CORE} of the core.

According to a preferred embodiment of the invention, the dielectric D1 or the dielectric D2 are selected from a group of exemplary glass: SF6, SF57, PBG-08, PBG-89, F2, FK5, NC21A, NC32, NC34, NC41, LLF1, PBS-57A, KB-03. A nano-inclusion dielectric is also made of glass whose thermal properties are matched to the thermal properties of the optical fibre core, so that they allow the technical draw of the optical fibre using the *stack-and-draw* technique. This condition is not met by just any set of glass. The material used for the nano-inclusion contains a metal or a metal alloy surrounded by the D2 dielectric having the refractive index n_{D2} or the D1 dielectric having the refractive index n_{D1}.

If the nano-inclusion comprises a metal or metal alloy surrounded by the D2 dielectric, then it is preferred to use a metal selected from a group of metals comprising silver, gold, aluminium, copper, zinc, chromium, tin, or alloy of these metals.

The values of the refractive indexes are dependent on the radiation wavelength. The radiation wavelength for which the invention is intended is 300 nm - 10 µm.

### Preferred embodiments of the invention

The optical fibre according to the invention has a specific structure, in particular the size of the nanostructure (nano-inclusion) in its core, predetermined diameter of the core, the lattice constant and the filling factor of the photonic cladding, and optical and thermal properties of the glass needed to produce the structure.

The invention will now be further described with reference to the accompanying drawings, in which:

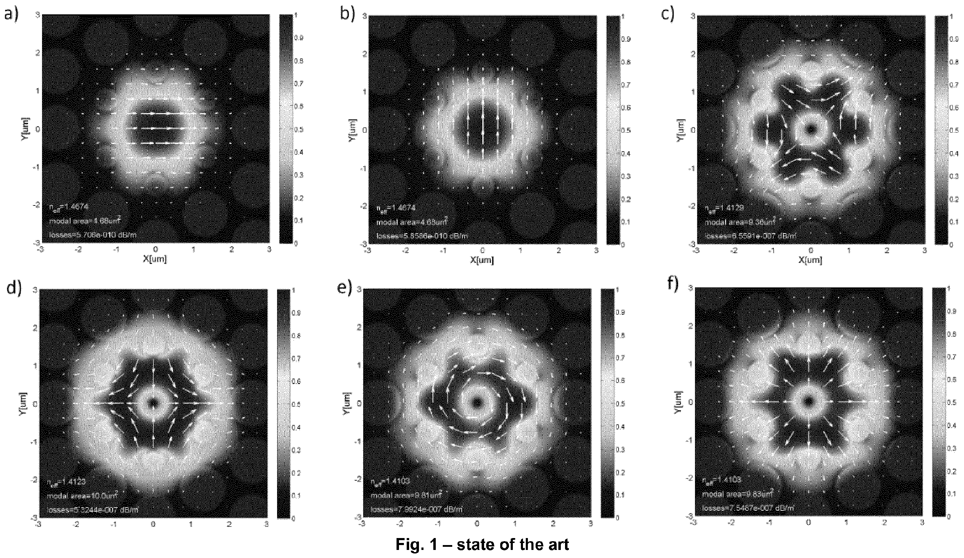

- Fig. 1: shows numerically calculated modes of a known optical fibre for low-loss transfer of the radial polarisation with the core 1, without the inclusion: a) linearly polarised (horizontally) fundamental mode with Gaussian intensity profile LP₀₁(HE₁₁) b) linearly polarised (vertically) fundamental mode with Gaussian intensity profile LP₀₁(HE₁₁), c) odd hybrid mode-1 LP₁₁(HE₂₁), d) even hybrid mode-2 LP₁₁(HE₂₁), e) azimuthal mode LP₁₁(TE₀₁), f) radial mode LP₁₁(TM₀₁),

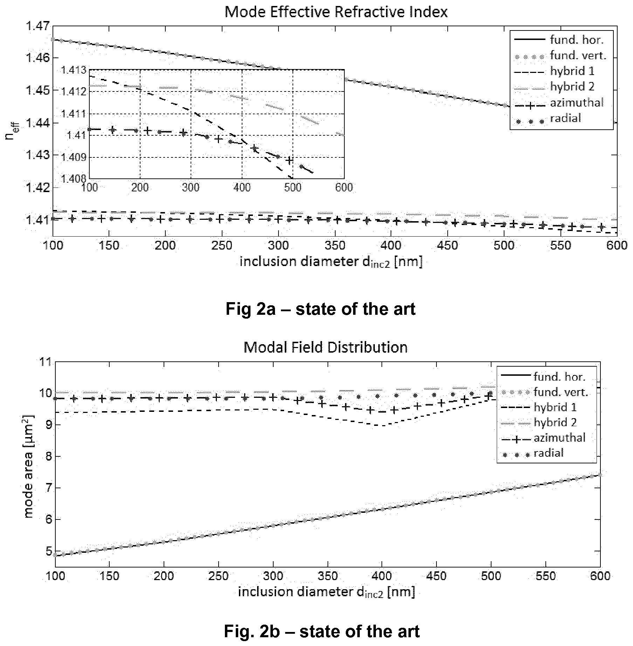

- Fig. 2: shows numerically calculated parameters: a) the effective refractive index n_{eff} for individual modes and b) modal field area for individual modes, as a function of a diameter of the air nano-inclusion (nano-inclusion being an air nanohole in the core) of the optical fibre in the publication [1] (see Example 3). The nano-inclusion is characterized by a lower refractive index than the core,

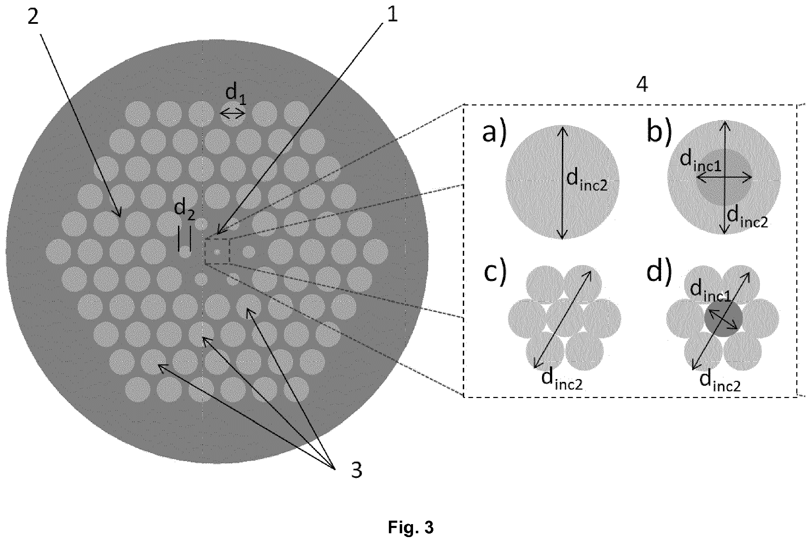

- Fig. 3: shows a schematic diagram of optical fibres of comparative examples as well as optical fibres according to the invention. The nano-inclusion 4 is in the form of: 4a) a rod made of the D1 dielectric having the refractive index higher than the core 1, 4b) a metal rod arranged in the nanotube made of a dielectric with a different refractive index than the core, as per the invention; 4c) set of rods symmetrically arranged relative to the core 1 of the optical fibre, made of a dielectric having the refractive index higher than the core 1, or 4d) a set of rods made of a dielectric with a different refractive index than the core 1, surrounding the metal rod, as per the invention;

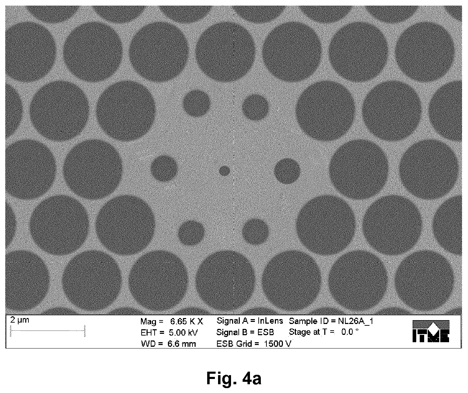

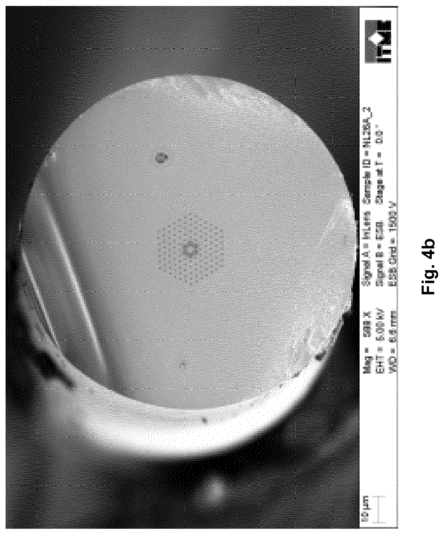

- Fig. 4: shows a photograph of an optical fibre according to the invention taken with an electron microscope in which: a) diameters d₂ of the nanorods of the inner ring are smaller than the diameters d₁ of the nanorods 3 of the outer ring of the photonic cladding 2, b) diameters d₂ of the nanorods 3 of the inner ring are bigger than the diameters d₁ of the nanorods of the outer ring of the photonic cladding 2,

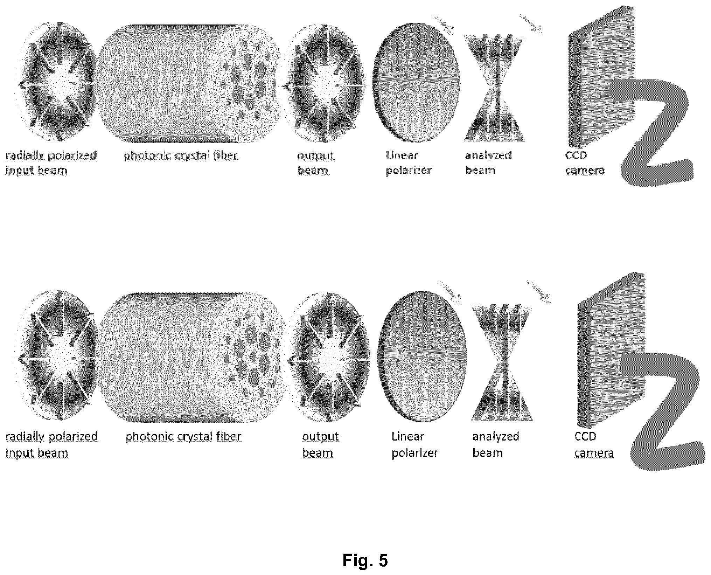

- Fig. 5: shows an optical fibre according to the invention used in the scheme of the experimental setup used to measure its polarization properties,

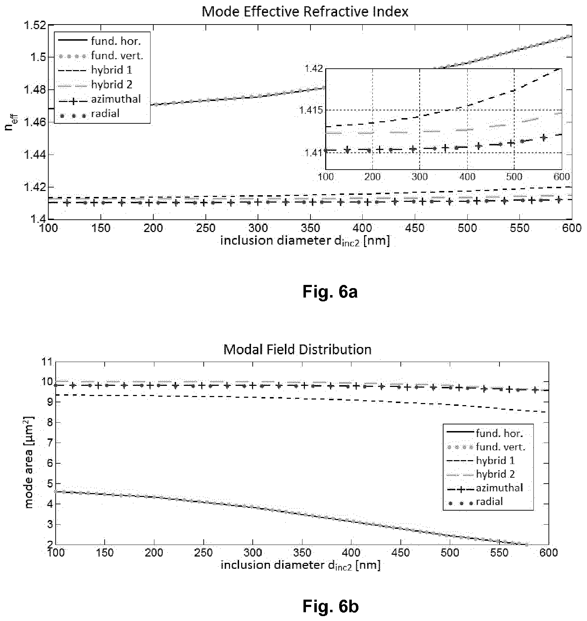

- Fig. 6: shows numerically calculated values for an optical fibre of a comparative example, as a function of the diameter d_{INC 2} of the nano-inclusion 4 filled only with the D1 dielectric having the refractive index higher than the core 1 (using SF6 glass): a) the effective refractive index n_{eff} for individual modes and b) modal field area for individual modes,

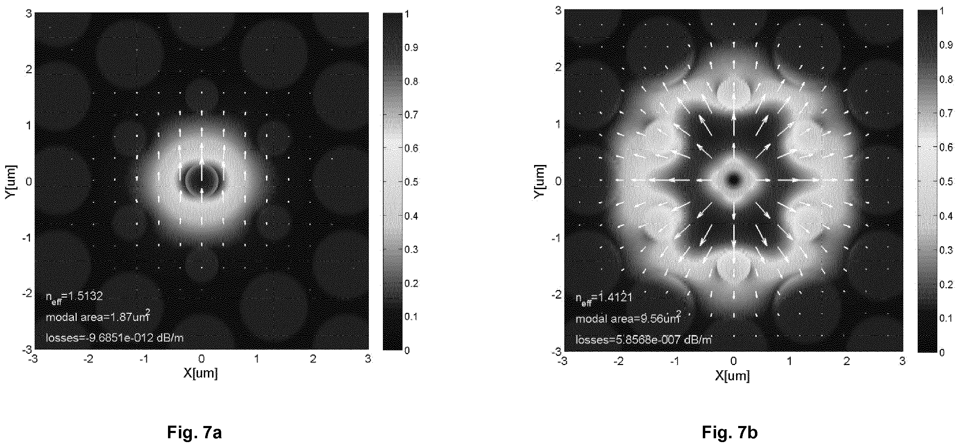

- Fig. 7: shows numerically calculated modes of an optical fibre of a comparative example, with the nano-inclusion 4 filling the core 1, filled only with the D1 dielectric having the refractive index higher than the core 1 (using SF6 glass), having a diameter d_{INC 2} of 150 nm (see Example 1): a) strongly narrowed linearly polarised (vertically) fundamental mode with Gaussian intensity profile LP₀₁(HE₁₁), b) radial mode LP₁₁(TM₀₁),

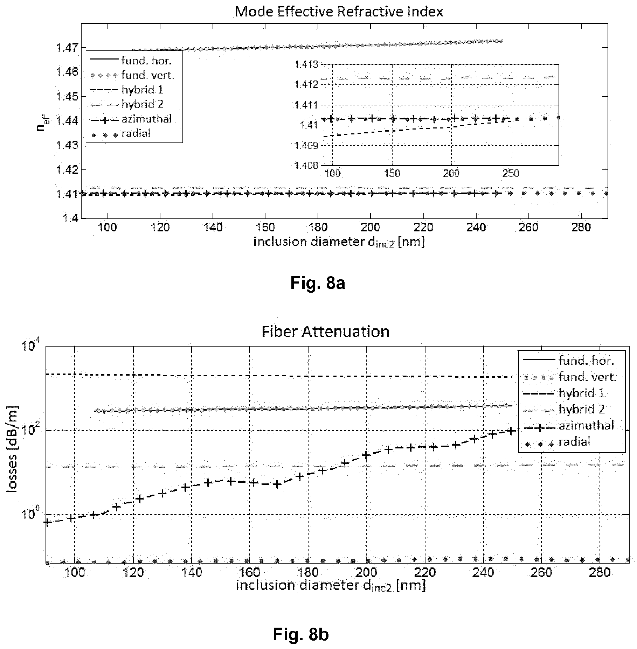

- Fig. 8: shows numerically calculated parameters for an optical fibre according to the invention: a) the effective refractive index n_{eff} for individual modes and b) attenuation for individual modes, as a function of a diameter d_{INC 2} of the nano-inclusion 4, comprising a silver rod in its central part, arranged in the D1 dielectric (SF6 glass), having the refractive index higher than the refractive index n_{CORE} of the core 1,

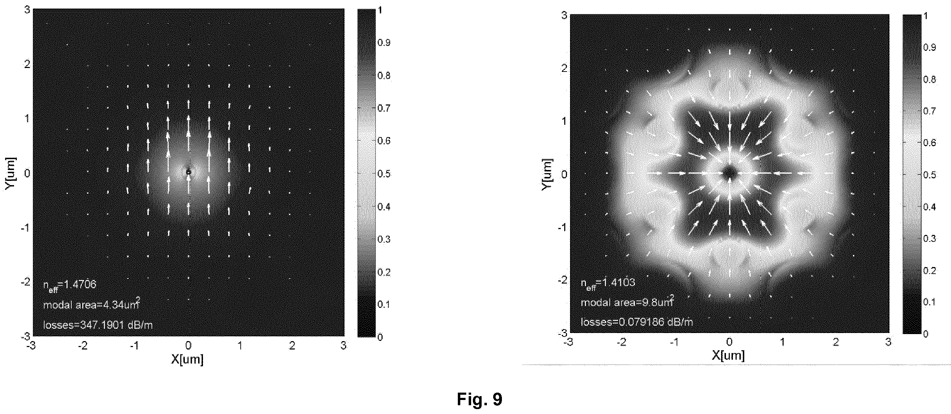

- Fig. 9: shows numerically calculated modes of an optical fibre according to the invention with the nano-inclusion 4 filling the core 1, comprising a silver rod having a diameter of D_{INC 1} 50 nm arranged in the D1 dielectric (SF6 glass), having the refractive index higher than the refractive index n_{CORE} of the core 1 and a diameter d_{INC 2} of 150 nm: a) strongly suppressed linearly polarised (vertically) fundamental mode with Gaussian intensity profile LP₀₁(HE₁₁), b) radial mode LP₁₁(TM₀₁),

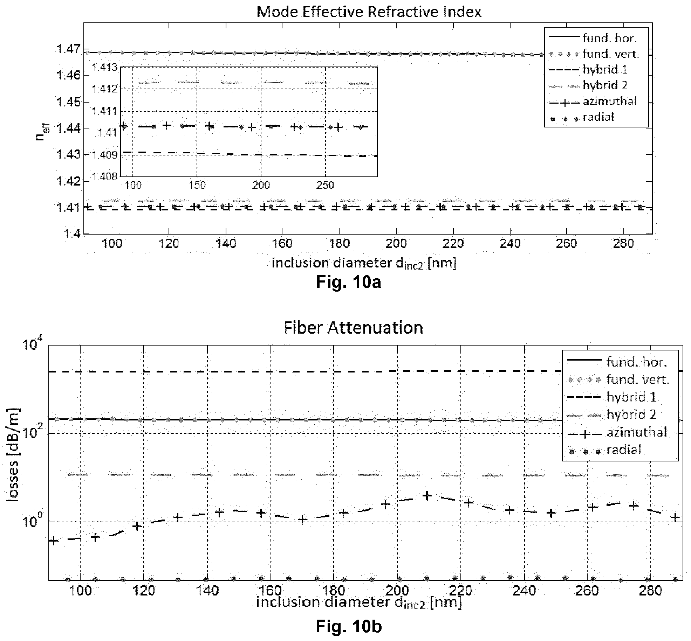

- Fig. 10: shows numerically calculated parameters for an optical fibre according to the invention: a) the effective refractive index for individual modes and b) attenuation for individual modes, as a diameter d_{INC 2} of the outer ring of the nano-inclusion 4 made of the D2 dielectric (FK5 glass) having the refractive index lower than the refractive index n_{CORE} of the core 1, surrounding the central part of the nano-inclusion 4 comprising a silver rod, and

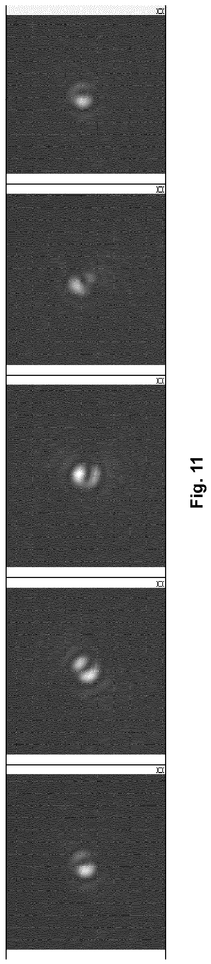

- Fig. 11: shows an image of the mode captured by a CCD camera, having a radial polarisation with differently oriented linear polariser, for the radiation wavelength of 1550 nm for the optical fibre according to the invention.
The following indications were used in the figure: 1 - optical fibre core; 2 - optical fibre photonic cladding; 3 - photonic cladding 2 air nanoholes or photonic cladding 2 nanorods; 4 - nano-inclusion in a core 1; d₁, d₂ - diameter of nanoholes or nanoholes of photonic cladding 2; d_{INC 1} - diameter of nano-inclusion 4 metal rod; d_{INC 2} - diameter of nano-inclusion 4.

Dimensions of the optical fibres given in Examples 1-4 are merely illustrative and not limiting, without affecting the scope of the invention. The selection of a particular dielectric in the embodiments is merely exemplary and not limiting.

The criterion for the selection of a particular glass is the difference in refractive index of the nano-inclusion dielectric and the optical fibre core and the thermal properties of such glass should be matched to the thermal properties of the optical fibre core, allowing for technical drawing of the optical fibre using the *stack-and-draw* technique. This condition is not met by just any set of glass.

### Example 1

An optical fibre of a comparative example not covered by the appended claims, shown in fig. 3 and fig. 4a, of a regular hexagonal structure has the photonic cladding 2 surrounding the core 1 arranged centrally in the optical fibre. Both the core 1 and the photonic cladding 2 are made of NC21A glass, being the basic glass. The properties of the optical fibre were examined using a radiation wavelength λ of 1.55 µm. The photonic cladding 2 is provided with nanorods with the diameters d₁ and d₂, made of FK5 glass. Therefore, the effective refractive index n_{eff} of the photonic cladding 2, being an average refractive index of the NC21A basic glass and the FK5 glass is lower than the refractive index n_{CORE} of the core 1.

Alternatively, there are hollow nanoholes filled with air in the photonic cladding 2, with the diameters d₁ and d₂, respectively.

Referring to Fig. 4a, the nanorods 3 of the photonic cladding 2 having a diameter d₂ of 600 nm form the inner ring directly adjacent to the core 1, and the nanorods 3 having a diameter d₁ of 1200 nm form the outer ring of the photonic cladding 2, which is adjacent to the inner ring formed of the capillaries d₂. The diameter of the photonic cladding 2 is 16 200 nm and the diameter d_{CORE} of the core 1 is 2400 nm.

The nano-inclusion 4, in the form of a single rod (type of nano-inclusion 4a presented in Fig. 3) is arranged inside the core 1, in its geometrical centre. The rod is made only of the D1 electric, having the refractive index n_{D1} higher than the refractive index of the basic glass, i.e. the refractive index n_{CORE} of the core 1. The D1 dielectric is SF6 glass. The diameter D_{INC 2} of the nano-inclusion 4 is 150 nm.

The refractive index, with the radiation wavelength of 1.55 µm and for the applied dimensions of the optical fibre elements - for NC21A, FK5 and SF6 glass is: n_{NC21A} = 1.5273; n_{FK5}= 1.47293; n_{SF6} = 1.80518, respectively. The following condition is met: n₀₁> n_{CORE}>n_{eff}

Alternatively, the nano-inclusion 4 is a set of rods arranged symmetrically relative to the core 1 made of NC21A glass, (type of nano-inclusion 4c shown in Fig. 3) constructed entirely of the D1 dielectric of SF6 glass. The refractive index of the D1 dielectric is higher than the refractive index n_{RDZ} of the core 1 and the SF6 glass is thermally matched to the material of the core 1.

The presented optical fibre transfers radial polarisation. At the same time the fundamental mode is partially discriminated (Fig. 7). For this optical fibre, the modal field area of higher-order modes of cylindrical symmetry is comparable to the modal field area of the fundamental mode of conventional single-mode optical fibres. At the same time it is possible to obtain a lower attenuation for higher-order modes and higher birefringence than in conventional optical fibres.

### Example 2

The optical fibre of a regular hexagonal structure is constructed analogously to Example 1 of photonic cladding 2 and core 1 having a cross-section as shown in Fig. 3 and Fig. 4a. The properties of the optical fibre were examined using a radiation wavelength λ of 1.55 µm. Core 1 and photonic cladding 2 are made of basic glass - NC21A. The photonic cladding 2 is provided with the nanoholes 3 filled with air, with the diameters d₁ and d₂, and the effective refractive index n_{eff} of the photonic index 2 is lower than the refractive index n_{CORE} of the core 1.

The nanorods 3 of the photonic cladding 2 having a diameter d₂ of 600 nm, form the inner ring directly adjacent to the core 1, and the nanorods 3 having a diameter d₁ of 1200 nm form the outer ring of the photonic cladding 2, which is adjacent to the inner ring formed of the capillaries d₂. The diameter of the photonic cladding 2 is 16 200 nm and the diameter of the core 1 is 2400 nm.

Inside the core 1, in its geometrical centre, there is the nano-inclusion 4 in the form of a rod of metal alloy: Ag(56%), Cu(22%), Zn(17%), Sn(5%) (type of nano-inclusion 4b in Fig. 3), arranged in a ring-shaped D2 dielectric having a diameter d_{INC 2}. The D2 dielectric is a material thermally matching the material of the core 1 and its refractive index n_{D2} is lower than the refractive index n_{CORE} of the core 1. The D2 dielectric is FK5 glass. The diameter d_{INC 1} of the nano-inclusion 4 metal rod is 50 nm, and the diameter d_{INC 2} of the nano-inclusion 4 is 150 nm.

The refractive index, with the radiation wavelength of 1.55 µm and for the applied dimensions of the optical fibre elements - for the glass NC21A, FK5 is:
n_{NC21A} = 1.5273 ; n_{FK5}= 1.47293, respectively. The following condition is met: n_{D2}< n_{CORE}

Alternatively, the nano-inclusion 4 is a rod made of metal alloy: Ag(56%), Cu(22%), Zn(17%), Sn(5%) arranged in the ring-shaped D1 dielectric of SF6 glass. The material of the core 1 is NC21A glass. The refractive index of the D1 dielectric, n_{SF6} = 1.80518 is higher than the refractive index of the core 1. Material of the D1 dielectric is thermally matched to the material of the core 1.

The optical fibre presented in the present embodiment transfers radial polarisation in all contemplated configurations. At the same time the fundamental mode is strongly discriminated due to the attenuation of metals (Fig. 10 and Fig. 8).

### Example 3 - comparison of the impact of embedding inside the optical fibre core the nano-inclusion and its types: only dielectric nano-inclusion D1 or air nano-inclusion - on the optical properties of the optical fibre according to the invention.

The impact of embedding inside the core 1 the nano-inclusion 4, filled with the D1 dielectric having the structure shown in Fig. 3 (type of nano-inclusion 4a and c) and discussed in Example 1, on the optical properties of the optical fibre according to the invention was compared with the existing solutions:
- from the publication [1]: Birefringence and dispersion of cylindrically polarized modes in nanobore photonic crystal fiber T. G. Euser, M. A. Schmidt, N. Y. Joly, C. Gabriel, C. Marquardt, L. Y. Zang, M. Förtsch, P. Banzer, A. Brenn, D. Elser, M. Scharrer, G. Leuchs, and P. St.J. Russell, J. Opt. Soc. Am. B 28, 193-198 (2011)], wherein the nano-inclusion in the form of an air nanohole (air nano-inclusion) is arranged inside the optical fibre core and with an option of no nano-inclusion in the optical fibre core.

In the solution from the publication [1] an air nano-inclusion in the form of an air nanohole is used in the optical fibre core. Fig. 2 shows numerically calculated parameters for this optical fibre: the effective refractive index n_{eff} for individual modes (Fig. 2a) and the area of the modal field (Fig. 2b) as a function of a diameter of the nano-inclusion. Air nano-inclusion is characterized by a lower refractive index than the core. Although embedding the air nanohole inside the core causes the separation of individual modes, which increases with the diameter of the hole, increasing the diameter of the air nano-inclusion causes widening of the modal field area , especially of the fundamental modes, which is a negative phenomenon.

For the optical fibre according to Example 1 (fig. 3 - type of nano-inclusion 4a and c) comprising the nano-inclusion 4, filled only with the D1 dielectric made of SF6 glass and with the photonic cladding 2 and core 1 made of NC21A basic glass, and where there is a relationship that n_{D1} > n_{CORE} - graphically presented in Fig. 6a and b, calculated: effective refractive index (fig. 6a) and the area of the modal field (fig. 6b), as a function of the diameter d_{INC 2} of the nano-inclusion 4. It turned out that the increase of the diameter d_{INC 2} of the nano-inclusion 4 filled only with SF6 glass causes birefringence, as high as in the case of air nano-inclusion of publication [1], however, the following relationship has unexpectedly been found in the case of using the nano-inclusion 4 made of SF6 glass: the increase of the diameter d_{INC 2} of the nano-inclusion 4 causes strong narrowing of the modal field area of the fundamental modes. It is a highly desirable effect because the narrowing of the modal field area significantly impedes the excitation of the fundamental mode. The operation of such optical fibre, with the nano-inclusion 4 filled with SF6 glass with the nano-inclusion diameter d_{INC 2} of 150 nm, is also confirmed by calculated mode field distributions shown in Fig. 7: of the fundamental mode (Fig. 7a) and the radial mode (Fig. 7b), respectively.

In the case of the photonic crystal fibre with a core without the inclusion, distributions of electric fields for individual modes are numerically calculated and are shown in fig. 1. All the modes of such an optical fibre are characterized by low attenuation. Comparing the optical fibre according to the invention with the photonic crystal fibre having a core without the inclusion, the modal field area of the fundamental mode HE₁₁ of a new optical fibre is 2.5 times more narrow, while the modal field area of the radial mode is virtually unchanged.

### Conclusions

The optical fibre with a structure presented in Fig. 3 (type of nano-inclusion 4 a and c), discussed in Example 1, is more suitable for the propagation of radially polarised light beam than conventional optical fibres without the inclusion or whose inclusion is a hollow air nanohole in the photonic cladding 2. Birefringence higher than in conventional optical fibres prevents random transfer of power between the modes and due to partial discrimination of the fundamental mode it is easier to couple radial polarised light with it.

### Example 4 - analysis of the impact of embedding a metallic-dielectric nano-inclusion 4 inside the core 1 on the optical properties of the optical fibre according to the invention.

The impact of embedding a dielectric nano-inclusion 4 inside the core 1, with a structure shown in Fig. 3 (type of nano-inclusion 4 b and d), comprising a rod of metal alloy and discussed in Example 2 - on the optical properties of the optical fibre according to the invention was analysed, compared with the results obtained when embedding the nano-inclusion in the form of a silver rod having a diameter of 50 nm inside the core of the optical fibre, based on the disclosure of the optical fibre of publication [2]: An azimuthally polarizing photonic crystal fibre with a central gold nanowire P. Uebel, M. A. Schmidt, M. Scharrer and P. St. J. Russell, New J. Phys . 13 063016 (2011), which uses an analogous metal rod, but made of gold. According to the publication [2] a nano-inclusion in the form of a golden rod is used to discriminate the fundamental mode.

The results of the analysis of the optical fibre with a core comprising a nano-inclusion in the form of a silver rod, shown in Table 1 indicate that due to such nano-inclusion birefringence between the azimuthal and radial modes was achieved. Due to the attenuation, also the fundamental modes HE₁₁ and hybrid modes HE₂₁ were discriminated. Unfortunately, this solution also results in a significant increase in attenuation for radial and azimuthal modes, which disqualifies this solution in practical applications.

**Table 1 shows a numerically calculated effective refractive index and attenuation for individual modes of a well-known optical fibre with a metallic nano-inclusion suggested in publication [2]. In the discussed option, the core comprises a silver nano-inclusion having a diameter of 50 nm:**

| | **fundamental horizontal** | **fundamental vertical** | **hybrid 1** | **hybrid 2** | **azimuthal** | **radial** |
|---|---|---|---|---|---|---|
| **n_{eff}** | 1.46855 | 1.46854 | - | 1.41234 | 1.41035 | 1.41031 |
| **attenuation [dB/m]** | 915 | 915 | - | 87 | 1.21 | 1.74 |

In the case of the optical fibre according to the invention, discussed in Example 2 and with a structure shown in Fig. 3b and d, two configurations are allowed: the first one, when the material D1 of a dielectric nanotube is characterized by the refractive index n_{D1} higher than the refractive index n_{CORE} of the core 1, and the second one, when the refractive index of the D2 dielectric material is lower than the refractive index n_{CORE} of the core 1. In the case of the results presented in the graphs of Fig. 8 and Fig. 10, which present the dependence of effective refractive index and attenuation for individual modes on the diameter d_{INC 2} of a dielectric nanotube surrounding a silver rod, the following materials are used: Fig. 8 presents a situation when a rod of the D1 dielectric is made of SF6 glass, with a higher refractive index than the refractive index n_{CORE} of the core, and Fig. 10 presents a situation when the rod of the D2 dielectric is made of FK5 glass, with a lower refractive index n_{D2} than the refractive index n_{CORE} of core 1. In both cases, individual modes are separated from each other. Detailed figures regarding the effective refractive index and attenuation for the structure of the optical fibre according to the invention shown in Fig. 3b and d described in Example 3 comprising the nano-inclusion 4 in the form of a silver rod having a diameter of d_{INC 1} = 50 nm in the core 1, surrounded by a nanotube made of SF6 glass (D1 dielectric, keeping the relationship: n_{D1} > n_{CORE}) or of FK5 glass (D2 dielectric, keeping the relationship: n_{D2} < n_{CORE}) having a diameter d_{INC 2} of 150 nm - are shown in Table 2:

| | **fundamental horizontal** | **fundamental vertical** | **hybrid 1** | **hybrid 2** | **azimuthal** | **radial** |
|---|---|---|---|---|---|---|
| | **Ag rod d_{INC 1} = 50nm surrounded by a SF6 tube with a d_{INC 2} = 150nm; n_{D1} >** n_{CORE} | | | | | |
| **n_{eff}** | 1.47062 | 1.47061 | 1.40972 | 1.41227 | 1.41030 | 1.41029 |
| **attenuation [dB/m]** | 347 | 347 | 1946 | 14 | 6.34 | 0.08 |

| | **Ag rod d_{INC 1}= 50nm surrounded by a FK tube d_{INC 2}=150nm ; n_{D2} <** n_{CORE} | | | | | |
|---|---|---|---|---|---|---|
| **n_{eff}** | 1.46830 | 1.46829 | 1.40907 | 1.41226 | 1.41029 | 1.41028 |
| **attenuation [dB/m]** | 202 | 202 | 2453 | 11 | 1.8 | 0.05 |

Improved performance of the optical fibre according to the present invention compared to the prior art is confirmed by the calculated modal field distributions shown in Fig. 7 for the inclusion with the refractive index higher than the refractive index of the core and Fig. 9 for the inclusion with the refractive index lower than the refractive index of the core. They refer to: the fundamental mode (Fig. 7a and Fig. 9a) and the radial mode (Fig. 7b and Fig. 9b), respectively. Modes with radial polarisation are identical with the mode of the original optical fibre without the inclusion of Fig. 1f, however, the fundamental mode is strongly narrowed and attenuated.

### Conclusions

The application of a dielectric-metallic inclusion 4 in the optical fibre according to the invention, in contrast to purely metallic inclusion known from the publication [2] allowed to reduce the attenuation for the radial mode by two orders of magnitude. In other words, the proposed metallic-dielectric inclusions, in both options, made it possible to design the optical fibre that allows to transfer only radial polarisation (single-mode optical fibre).

### Example 5 - application of the optical fibre according to the invention in the scheme of an experimental setup used to measure the polarisation properties.

The scheme of the experimental setup used for the characterisation of the optical properties of the optical fibre according to the invention is shown in Fig. 5. Radial polarisation beam is coupled to a photonic crystal fibre. The output beam is analysed by a rotating linear polariser. The intensity is recorded with a CCD camera. The experimental results are shown in Fig. 11. Both the image following the rotating polariser and its distinctive two-half-shape confirm maintaining the radial polarisation in the optical fibre.

### Example 6 - a method of manufacturing the optical fibre

The optical fibre of Example 1 was manufactured using the *stack-and-draw* technique. First, the structural preform was stacked, so that the material of NC21A glass, intended eventually for the core 1, was centrally located, surrounded with the material intended for the photonic cladding 2, i.e. with NC21A glass with dielectric inclusions (nanorodes 3) made of FK5 glass. The material of SF6 glass intended for the nano-inclusion 4 was placed inside the core 1, in its geometrical centre. Thus prepared preform was repeatedly thinned at the tower for drawing optical fibres. The process of drawing was controlled by adjusting the temperature and the feeding speed of the preform and drawing of the fibre from the furnace.

## Claims

1. A photonic crystal fibre for transferring a radially polarised light beam, having a core (1), preferably centrally located, and a photonic cladding (2) surrounding the core (1), wherein the photonic cladding (2) comprises nanoholes filled with air or nanorods (3), said fibre having the refractive index n_{CORE} of the core (1) higher than the effective refractive index n_{eff} of the photonic cladding (2) and higher than the refractive index of the nanoholes or rods (3), and within the core (1), preferably at its geometrical centre, a nano-inclusion (4) is arranged, **characterized in that** the nano-inclusion (4) in the form of a metal rod arranged in a nanotube made of a dielectric or surrounded by a set of rods made of dielectric, wherein said dielectric has the refractive index n_{INC} different from the refractive index n_{CORE} of the core (1), and the said dielectric is glass, and preferably the material of the rod is selected from a group of metals comprising silver, gold, aluminium, copper, zinc, chromium, tin or an alloy of these metals, and wherein the nano-inclusion (4) introduces birefringence between the azimuthal and radial polarization modes and discriminates all the optical fibre modes except the radial polarisation mode.

2. The fibre according to claim 1, wherein the dielectric is a D1 dielectric having the refractive index n_{D1} higher than the refractive index n_{CORE} of the core (1).

3. The fibre according to claim 1, wherein the dielectric is a D2 dielectric having the refractive index n_{D2} lower than the refractive index n_{CORE} of the core (1).

4. The fibre according to any one of the preceding claims 1 to 3, wherein the dielectric D1 or the dielectric D2 are selected from a group of exemplary glass: SF6, SF57, PBG-08, PBG-89, F2, FK5, NC21A, NC32, NC34, NC41, LLF1, PBS-57A, KB-03.

5. The fibre according to any one of the preceding claims 1 to 4, wherein the core (1) is made of glass, for example NC21Aglass, or the photonic cladding (2) is made of glass, for example NC21A glass, or nanorods (3) are made of glass with the refractive index lower than the refractive index n_{CORE} of the core (1), preferably selected from a group of exemplary glass: SF6, SF57, PBG-08, PBG-89, F2, FK5, NC21A, NC32, NC34, NC41, LLF1, PBS-57A, KB-03.

6. The fibre according to any one of the preceding claims 1 to 5, wherein the photonic cladding (2) includes an inner ring of the nanorods or nanoholes (3) directly adjacent to the core (1) and having a diameter d₂ and an outer ring of the nanorods or nanoholes (3) having a diameter d₁, wherein preferably the diameter d₂ is smaller than the diameter d₁, wherein preferably, the diameter d₂ is 600 nm and the diameter d₁ is 1200 nm.

7. The fibre according to any one of the preceding claims 1 to 6, wherein the nanorods or nanoholes (3) are arranged in the photonic cladding (2) in a hexagonal structure.

8. The fibre according to any one of the preceding claims 1 to 7, wherein the fibre transfers radial polarisation across the entire cross-section of the beam.

9. The fibre according to any one of the preceding claims 1 to 8, wherein the core (1) is located at the geometrical centre of the optical fibre.

10. A method of manufacturing the fibre according to any one of the preceding claims 1 to 9, using the *stack-and-draw* technique comprising the steps of:
- stacking materials for the fibre in structural preforms, so that the centrally located material for the core (1) is surrounded by a material for the photonic cladding (2), whereas in the material for the core (1) and preferably in its geometrical centre there is a material for the nano-inclusion (4), wherein the material for the nano-inclusion (4) contains a metal or a metal alloy surrounded by the dielectric having the refractive index n_{INC} different from the refractive index n_{CORE} of the core (1), and the said dielectric is made of glass, wherein it is preferred to use a metal selected from a group of metals comprising silver, gold, aluminium, copper, zinc, chromium, tin, or alloy of these metals,
- thinning the preform into the form of an optical fibre at the tower for drawing optical fibres.

11. The method according to claim 10 wherein a dielectric being the D1 dielectric is used, having the refractive index n_{D1} higher than the refractive index n_{CORE} of the core (1) or a dielectric being the D2 dielectric is used, having the refractive index n_{D1} lower than the refractive index n_{CORE} of the core (1).

12. The method according to claim 10 or 11 wherein the dielectric D1 or the dielectric D2 are selected from the group of exemplary glass: SF6, SF57, PBG-08, PBG-89, F2, FK5, NC21A, NC32, NC34, NC41, LLF1, PBS-57A, KB-03.

## Patentansprüche

1. Eine photonische Kristallfaser zum Übertragen eines radial polarisierten Lichtstrahls, aufweisend ein Kern (1), vorzugsweise mittig gelegen, und ein den Kern (1) umgebendes photonische Cladding (2), wobei das photonische Cladding (2) mit Luft oder Nanostäbchen (3) gefüllte Nanolöcher umfasst, wobei die genannte Faser den Brechungsindex n_{CORE} des Kerns (1) höher als der effektive Brechungsindex n_{eff} des photonischen Cladding (2) und höher als der Brechungsindex der Nanolöcher oder Stäbchen (3) aufweist, und innerhalb des Kerns (1), vorzugsweise in seinem geometrischen Zentrum, ein Nanoinklusion (4) angeordnet ist, **dadurch gekennzeichnet, dass** das Nanoinklusion (4) in Form eines Metallstabs in einer Nanoröhre angeordnet ist, die aus einem Dielektrikum besteht oder von einer Gruppe von Stäben aus Dielektrikum umgeben ist, wobei das genannte Dielektrikum den Brechungsindex n_{INC} der sich von dem Brechungsindex n_{CORE} des Kerns (1) unterscheidet aufweist, und das genannte Dielektrikum Glas ist, und vorzugsweise das Material des Stabes aus einer Gruppe von Metallen, umfassend Silber, Gold, Aluminium, Kupfer, Zink, Chrom, Zinn oder eine Legierung dieser Metalle ausgewählt ist, und wobei das Nanoinklusin (4) Doppelbrechung zwischen den azimutalen und radialen Polarisationsmoden einführt und alle optischen Fasermoden mit Ausnahme des radialen Polarisationsmodus diskriminiert.

2. Faser nach Anspruch 1, **wobei** das Dielektrikum ein D1-Dielektrikum einen Brechungsindex n_{D1} höher als der Brechungsindex n_{CORE} des Kerns (1) aufweisend ist.

3. Faser nach Anspruch 1, **wobei** das Dielektrikum ein D2-Dielektrikum einen Brechungsindex n_{D2} niedriger als der Brechungsindex n_{CORE} des Kerns (1) aufweisend ist.

4. Faser nach einem der vorhergehenden Ansprüche 1 bis 3, **wobei** das Dielektrikum D1 oder das Dielektrikum D2 aus einer Gruppe von beispielhaftem Glas ausgewählt sind: SF6, SF57, PBG-08, PBG-89, F2, FK5, NC21A, NC32, NC34, NC41, LLF1, PBS-57A, KB-03.

5. Faser nach einem der vorhergehenden Ansprüche 1 bis 4, **wobei** der Kern (1) aus Glas, beispielsweise NC21A-Glas, besteht oder das photonische Cladding (2) aus Glas, beispielsweise NC21A-Glas, besteht oder Nanostäbchen (3) aus Glas mit einem Brechungsindex niedriger als der Brechungsindex n_{CORE} des Kerns (1) bestehen, vorzugsweise ausgewählt aus einer Gruppe von beispielhaftem Glas: SF6, SF57, PBG-08, PBG-89, F2, FK5, NC21A, NC32, NC34, NC41, LLF1, PBS-57A, KB-03.

6. Faser nach einem der vorhergehenden Ansprüche 1 bis 5, **wobei** das photonische Cladding (2) einen inneren Ring der Nanostäbchen oder Nanolöcher (3) direkt benachbart zu dem Kern (1) umfasst und einen Durchmesser d₂ aufweist und einen äußeren Ring der Nanostäbchen oder Nanolöcher (3) mit einem Durchmesser d₁, wobei vorzugsweise der Durchmesser d₂ kleiner als der Durchmesser d₁ ist, wobei vorzugsweise der Durchmesser d₂ 600 nm und der Durchmesser d₁ 1200 nm beträgt.

7. Faser nach einem der vorhergehenden Ansprüche 1 bis 6, **wobei** die Nanostäbchen oder Nanolöcher (3) in dem photonischen Cladding (2) in einer hexagonalen Struktur angeordnet sind.

8. Faser nach einem der vorhergehenden Ansprüche 1 bis 7, **wobei** sie eine radiale Polarisation über den gesamten Querschnitt des Strahls überträgt.

9. Faser nach einem der vorhergehenden Ansprüche 1 bis 8, **wobei** der Kern (1) sich in der geometrischen Mitte der optischen Faser befindet.

10. Verfahren zur Herstellung der Faser nach einem der vorhergehenden Ansprüche 1 bis 9 unter Verwendung der Stapel-und-Zieh-Technik, umfassend die Schritte:
- Stapeln von Materialien für die Faser in Struktur-Vorformlingen, so dass das zentral angeordnete Material für den Kern (1) von einem Material für das photonische Cladding (2) umgeben ist, während im Material für den Kern (1) und vorzugsweise in dessen geometrischem Zentrum ein Material für das Nanoinklusion (4) ist, wobei das Material für das Nanoinklusion (4) ein Metall oder eine Metalllegierung, die von dem Dielektrikum umgeben ist enthält, das den Brechungsindex n_{INC}, der sich von dem Brechungsindex n_{CORE} des Kerns (1) unterscheidet aufweist, und das Dielektrikum aus Glas hergestellt ist, wobei es bevorzugt ist, ein Metall zu verwenden, das aus einer Gruppe von Metallen umfassend Silber, Gold, Aluminium, Kupfer, Zink, Chrom, Zinn oder eine Legierung dieser Metalle ausgewählt ist,
- Ausdünnen des Vorformlings in Form einer optischen Faser an dem Turm für optische Fasern zu ziehen.

11. Verfahren nach Anspruch 10, **wobei** ein Dielektrikum, das das D1-Dielektrikum ist, verwendet wird, wobei der Brechungsindex n_{D1} höher als der Brechungsindex n_{CORE} des Kerns (1) ist oder ein Dielektrikum das D2-Dielektrikum ist, verwendet wird, wobei der Brechungsindex n_{D1} niedriger als der Brechungsindex n_{CORE} des Kerns (1) ist.

12. Verfahren nach Anspruch 10 oder 11, **wobei** das Dielektrikum D1 oder das Dielektrikum D2 aus einer Gruppe von beispielhaftem Glas ausgewählt sind: SF6, SF57, PBG-08, PBG-89, F2, FK5, NC21A, NC32, NC34, NC41, LLF1, PBS-57A, KB-03.

## Revendications

1. Une fibre à cristal photonique pour transférer un faisceau de lumière polarisé radialement, ayant un noyau (1), de préférence situé au centre, et une gaine photonique (2) entourant le noyau (1), dans laquelle la gaine photonique (2) comprend des nanotrous remplis d'air ou de nanotiges (3), ladite fibre ayant l'indice de réfraction n_{NOYUAU} du noyau (1) supérieur à l'indice de réfraction effectif neff de la gaine photonique (2) et supérieur à l'indice de réfraction des nanotrous ou tiges (3), et à l'intérieur du noyau (1), de préférence à son centre géométrique, une nano-inclusion (4) est disposée, **caractérisée en ce que** la nano-inclusion (4) sous la forme d'une tige métallique disposée dans un nanotube constitué d'un diélectrique ou entouré d'un ensemble de tiges en diélectrique, dans laquelle ledit diélectrique a l'indice de réfraction n_{INC} différent de l'indice de réfraction n_{NOYUAU} du noyau (1), et ledit diélectrique est du verre, et de préférence le matériau de la tige est choisi dans un groupe de métaux comprenant l'argent, l'or, l'aluminium, le cuivre, le zinc, le chrome, l'étain ou un alliage de ces métaux, et dans laquelle la nano-inclusion (4) introduit une biréfringence entre les modes de polarisation azimutale et radiale et discrimine tous les modes de fibre optique sauf le mode de polarisation radiale.

2. La fibre selon la revendication 1, **dans laquelle** le diélectrique est un diélectrique D1 ayant l'indice de réfraction n_{D1} supérieur à l'indice de réfraction n_{NOYUAU} du noyau (1).

3. La fibre selon la revendication 1, **dans laquelle** le diélectrique est un diélectrique D2 ayant l'indice de réfraction n_{D2} inférieur à l'indice de réfraction n_{NOYUAU} du noyau (1).

4. La fibre selon l'une quelconque des revendications précédentes 1 à 3, **dans laquelle** le diélectrique D1 ou le diélectrique D2 sont choisis dans un groupe de verre à titre d'exemple: SF6, SF57, PBG-08, PBG-89, F2, FK5, NC21A, NC32, NC34, NC41, LLF1, PBS-57A, KB-03.

5. La fibre selon l'une quelconque des revendications précédentes 1 à 4, **dans laquelle** le noyau (1) est en verre, par exemple en verre NC21A, ou la gaine photonique (2) est en verre, par exemple en verre NC21A, ou les nanotiges (3) sont en verre avec l'indice de réfraction inférieur à l'indice de réfraction n_{NOYUAU} du noyau (1), de préférence choisi dans un groupe de verre à titre d'exemple: SF6, SF57, PBG-08, PBG-89, F2, FK5, NC21A, NC32, NC34, NC41, LLF1, PBS-57A, KB-03.

6. La fibre selon l'une quelconque des revendications précédentes 1 à 5, **dans laquelle** la gaine photonique (2) comprend une bague intérieure des nanotiges ou des nanotrous (3) directement adjacente au noyau (1) et ayant un diamètre d₂ et une bague extérieure des nanotiges ou des nanotrous (3) ayant un diamètre d₁, dans laquelle de préférence le diamètre d₂ est inférieur au diamètre d₁, dans laquelle de préférence le diamètre d₂ est de 600 nm et le diamètre d₁ est de 1200 nm.

7. La fibre selon l'une quelconque des revendications précédentes 1 à 6, **dans laquelle** les nanotiges ou nanotrous (3) sont disposés dans la gaine photonique (2) dans une structure hexagonale.

8. La fibre selon l'une quelconque des revendications précédentes 1 à 7, **dans laquelle** elle transfère la polarisation radiale sur toute la section transversale du faisceau.

9. La fibre selon l'une quelconque des revendications précédentes 1 à 8, **dans laquelle** le noyau (1) est situé au centre géométrique de la fibre optique.

10. Un procédé de fabrication de la fibre selon l'une quelconque des revendications précédentes 1 à 9, utilisant la technique d'empilement et d'étirage comprenant les étapes suivantes:
- empiler des matériaux pour la fibre dans des préformes structurelles, de sorte que le matériau central pour le noyau (1) est entouré d'un matériau pour la gaine photonique (2), tandis que dans le matériau pour le noyau (1) et de préférence dans son centre géométrique il y a un matériau pour la nano-inclusion (4), dans lequel le matériau pour la nano-inclusion (4) contient un métal ou un alliage métallique entouré par le diélectrique ayant l'indice de réfraction n_{INC} différent de l'indice de réfraction n_{NOYUAU} du noyau (1), et ledit diélectrique est en verre, dans lequel il est préférable d'utiliser un métal choisi dans un groupe de métaux comprenant l'argent, l'or, l'aluminium, le cuivre, le zinc, le chrome, l'étain ou un alliage de ces métaux,
- éclaircir la préforme sous la forme d'une fibre optique au niveau de la tour d'étirage de fibres optiques.

11. Le procédé selon la revendication 10, **dans lequel** un diélectrique étant le diélectrique D1 est utilisé, ayant l'indice de réfraction n_{D1} supérieur à l'indice de réfraction n_{NOYUAU} du noyau (1) ou un diélectrique étant le diélectrique D2 est utilisé, ayant l'indice de réfraction n_{D1} inférieur à l'indice de réfraction n_{NOYUAU} du noyau (1).

12. Le procédé selon la revendication 10 ou 11, **dans lequel** le diélectrique D1 ou le diélectrique D2 sont choisis dans le groupe de verre à titre d'exemple: SF6, SF57, PBG-08, PBG-89, F2, FK5, NC21A, NC32, NC34, NC41, LLF1, PBS-57A, KB-03.
